# EUROPÄISCHE PATENTANMELDUNG

(11) **EP 0 606 086 A1**
(43) Veröffentlichungstag der Anmeldung: **13.07.1994**
(21) Anmeldenummer: 94100166.1
(22) Anmeldetag: 07.01.1994
(51) Int. Cl.: B23C 5/24

(54) **Kassette zur Befestigung einer Wendeschneidplatte an einem Fräswerkzeug**

(30) Priorität: 08.01.1993 DE 4300289
(71) Anmelder: ALEIT GmbH, D-35239 Steffenberg (DE)
(72) Erfinder: Gambach, Gunnar, D-57074 Siegen (DE)
(74) Vertreter: Jochem, Bernd, Dipl.-Wirtsch.-Ing.

(57) **Zusammenfassung**

Die Kassette (22) dient zur lösbaren Befestigung einer Wendeschneidplatte (23) am Grundkörper eines Plan- und Eckfräsers. Sie ist mit einem Nest (24) zur Aufnahme der Wendeschneidplatte (23) in einer bestimmten Lage und mit Anlageflächen (34, 38) zur Positionierung des Nests (24) in einer definierten Stellung relativ zum Grundkörper ausgebildet. Um mit einer einzigen Kassette für verschiedene Fräswinkel von z. B. 90°, 75° und 45° auszukommen, sind nebeneinander mehrere Anlageflächen, z. B. mehrere Stiftlöcher (38) vorhanden, welche mehrere Relativstellungen des Nests (24) mit Bezug auf den Grundkörper definieren, in welchen die Hauptschneide einer im Nest eingespannten Wendeschneidplatte (23) unterschiedliche Fräswinkel einnimmt. Die mit den Anlageflächen (34, 38) an dem das Nest (24) bildenden Oberteil (33) der Kassette (22) zusammenwirkenden Gegenflächen (37) sind an einem Kassettenunterteil (32) ausgebildet oder angebracht.

## Beschreibung

Die Erfindung betrifft eine Kassette, bestehend aus einem Unterteil, welches in eine passende Einsenkung des Grundkörpers eines Plan- und Eckfräsers einsetzbar und darin durch äußere Positionierflächen und mit diesen zusammenwirkende Gegenflächen der Einsenkung in einer definierten Lage, gegebenenfalls mit Feineinstellung, befestigbar ist, und einem Oberteil, welches in mehreren unterschiedlichen Drehwinkelstellungen am Unterteil festlegbar ist und ein Nest zur Aufnahme einer Wendeschneidplatte in einer bestimmten Lage aufweist. Die Erfindung betrifft weiterhin einen mit wenigstens einer solchen Kassette bestückten Plan- und Eckfräser.

Plan- und Eckfräser für verschiedene Fräswinkel von z. B. 45°, 75° und 90° unterscheiden sich dadurch, daß quadratische, rechteckige oder dreieckige Wendeschneidplatten jeweils in entsprechenden Stellungen am Grundkörper des Fräsers festgelegt sind, wobei diese Stellungen durch Halteflächen bestimmt sind, an denen die Randkanten der am Grundkörper festgeschraubten oder festgeklemmten Wendeschneidplatten anliegen. Wegen der unterschiedlichen Lage der Halteflächen brauchte man normalerweise für jeden Fräswinkel einen anderen Grundkörper.

Um für verschiedene Fräswinkel mit einem einzigen Grundkörper auszukommen, ist es bekannt, sog. Kassetten zu verwenden (vgl. z. B. Katalog "Kennametal", Fräswerkzeuge MM 8515, Seiten 19 - 22; DE 37 32 268 A1, DE 33 17 916 C2). Die Kassetten haben innerhalb eines bestimmten Systems verschiedene Nester mit unterschiedlichen Halteflächen zur Aufnahme von Wendeschneidplatten unter dem jeweils gewünschten Winkel, aber allesamt dieselben Anschlußmaße und Anlageflächen, mit denen sie im festgeschraubten Zustand an entsprechenden Gegenflächen des Grundkörpers unverrückbar anliegen. Man braucht dabei allerdings für jede Größe des Grundkörpers mindestens drei verschiedene Kassetten für die üblichen Fräswinkel von 45°, 75° und 90°, und man muß zum Umrüsten jeweils die eine Art von Kassetten vollständig abnehmen und durch andere ersetzen. Soweit die bekannten Kassetten aus einem Unterteil und einem daran verstellbar angebrachten Oberteil bestehen, dient diese Verstellbarkeit nur der stufenlosen Feineinstellung auf einen einzigen, bestimmten Fräswinkel.

Als weiterer Stand der Technik ist die DD-PS 37 323 zu erwähnen, welche ein Fräswerkzeug beschreibt, bei dem nicht Kassetten mit Wendeschneidplatten, sondern Fräsmeißel mit unterschiedlichen Anlageflächen zur Anwendung kommen. Die Fräsmeißel können somit jeweils in zwei verschiedenen Ausrichtungen an eine Gegenfläche am Grundkörper des Fräsers angelegt werden. Damit ist jedoch die Lage des Fräsmeißels relativ zum Grundkörper nicht definiert. Er muß deshalb ebenso wie der Schneidplattenträger der DE 33 17 916 C2 mittels Meßinstrumenten oder Lehren durch axiale Verschiebung von Hand eingestellt und dann mittels Exzenterwellen festgeklemmt werden.

Schließlich ist in der DE 34 32 936 A1 ein Entgratwerkzeug beschrieben, bei dem an ringförmigen Grundkörpern jeweils zwei einteilige Kassetten festzuschrauben sind, die jeweils in einem Nest eine Wendeschneidplatte tragen. Um das Werkzeug auf unterschiedliche Entgratwinkel einstellen zu können, sind in die Kassetten Stifte eingeschraubt, die mit verschiedenen Stiftlöchern im Grundkörper in Eingriff gebracht werden können. Die Drehung der einteiligen Kassette erfolgt um die Befestigungsschraube, deren Mittellängsachse somit die Schwenkachse bildet. Eine die Schwenkachse umgebende Zentrierfläche fehlt. Da sich die Schwenkachse mit Abstand neben der Wendeschneidplatte befindet, ergibt sich für deren äußere Ecke beim Verschwenken eine große Bogenlänge. Die Konstruktion des Entgratwerkzeugs wäre daher für die Übernahme auf Plan- und Eckfräser ungeeignet. Dort ist ein sehr genau definierter Sitz der Wendeschneidplatten erforderlich, und wegen der normalerweise großen Zahl am Umfang des Grundkörpers zu befestigender Kassetten fehlt der Platz, um unter den radial ausgerichteten Kassetten tangentiale Bohrungen oder andere Zentriermittel anzubringen.

Der Erfindung liegt die Aufgabe zugrunde, ausgehend von den bekannten Kassetten für Plan- und Eckfräser, z. B. gemäß DE 37 32 268 A1, eine Kassette zur Verfügung zu stellen, welche mehrere bisher unterschiedliche Kassetten ersetzen und somit die Anzahl der insgesamt benötigten Kassetten verringern kann und das Umrüsten vereinfacht.

Vorstehende Aufgabe wird erfindungsgemäß dadurch gelöst, daß das Oberteil mittels einer daran ausgebildeten Zentrierfläche und mehrerer exzentrisch zu einer dadurch bestimmten Schwenkachse angeordneter Fixierflächen in solchen Drehwinkelstellungen am Unterteil festlegbar ist, daß der Fräswinkel der Hauptschneide wahlweise 45° oder 90° beträgt, wobei sich die Schwenkachse im mittleren Bereich der Wendeschneidplatte befindet.

Es mag sein, daß die Notwendigkeit, Halteflächen und Anlageflächen unter vorbestimmten Winkeln an der Kassette vorzusehen, welche einerseits die Wendeschneidplatte, andererseits die Kassette im befestigten Zustand jeweils unverrückbar halten, davon abgehalten hat, nach einer variablen Lösung zu suchen. Vielleicht hat dabei auch eine Rolle gespielt, daß man mit den unter verschiedenen Winkeln eingespannten Wendeschneidplatten genau auf demselben Fräserdurchmesser bleiben wollte, obgleich es darauf in der Praxis nicht ankommt. Es lassen sich durchaus auch mehrere Anlageflächen mit definierter Lage am Oberteil der Kassette anbringen, durch die sich im Zusammenwirken mit entsprechenden Gegenflächen am Kassettenunterteil jede Wendeschneidplatte in z. B. drei unterschiedlichen Stellungen jeweils unverrückbar am Grundkörper festlegen läßt.

Die verschiedenen Fräswinkel ergeben sich durch Verschwenken des Kassettenoberteils relativ zum Unterteil. Um das Kassettenoberteil dann in einer bestimmten Drehwinkelstellung unverrückbar festzulegen, könnten die beiden relativ zueinander verschwenkbaren Teile z. B. mit einer Stirnverzahnung (Hirth-Verzahnung) versehen sein. Wegen der geforderten Genauigkeit ist jedoch vorgesehen, daß die Anlageflächen eine rotationssymmetrische, z. B. zylindrische oder konische Zentrierfläche und mehrere exzentrisch zu einer dadurch bestimmten Schwenkachse angeordnete Fixierflächen aufweisen, welche vorzugsweise Stiftlöcher sind, deren Mittellängsachsen auf gleichem Radius mit Bezug auf die Schwenkachse liegen und sich parallel zu dieser erstrecken. Man hat hierbei nur zylindrische oder konische Flächen, die sich verhältnismäßig einfach mit hoher Genauigkeit bearbeiten lassen. Es bietet weiterhin herstellungstechnische Vorteile, wenn in bevorzugter praktischer Ausführung die Schwenkachse die Mittellängsachse einer Gewindebohrung für eine Befestigungsschraube ist. Dadurch, daß sich die Schwenkachse im mittleren Bereich der Wendeschneidplatte befindet, ergeben sich durch eine Drehbewegung des Nests um die Schwenkachse nur verhältnismäßig kleine, für die Praxis unbedeutende Änderungen des Durchmessers des Fräsers. Außerdem werden die Schneidkräfte nahe den Schneidkanten aufgenommen.

Anhand der beigefügten Zeichnung wird nachstehend ein Ausführungsbeispiel der Erfindung näher erläutert. Es zeigen:
- Fig. 1: eine Seitenansicht, zum Teil im Schnitt, eines Plan- und Eckfräsers mit verstellbaren zweiteiligen Kassetten, wobei eine der Kassetten in drei verschiedenen Stellungen gezeigt ist;
- Fig. 2: eine Stirnansicht einer am Grundkörper des Fräsers befestigten Kassette gemäß Fig. 1;
- Fig. 3: in einer Ansicht entsprechend Fig. 1 ein Fräswerkzeug mit zweiteiligen Kassetten;
- Fig. 4: eine Draufsicht auf die mit einer Wendeschneidplatte bestückte Kassette nach Fig. 3.

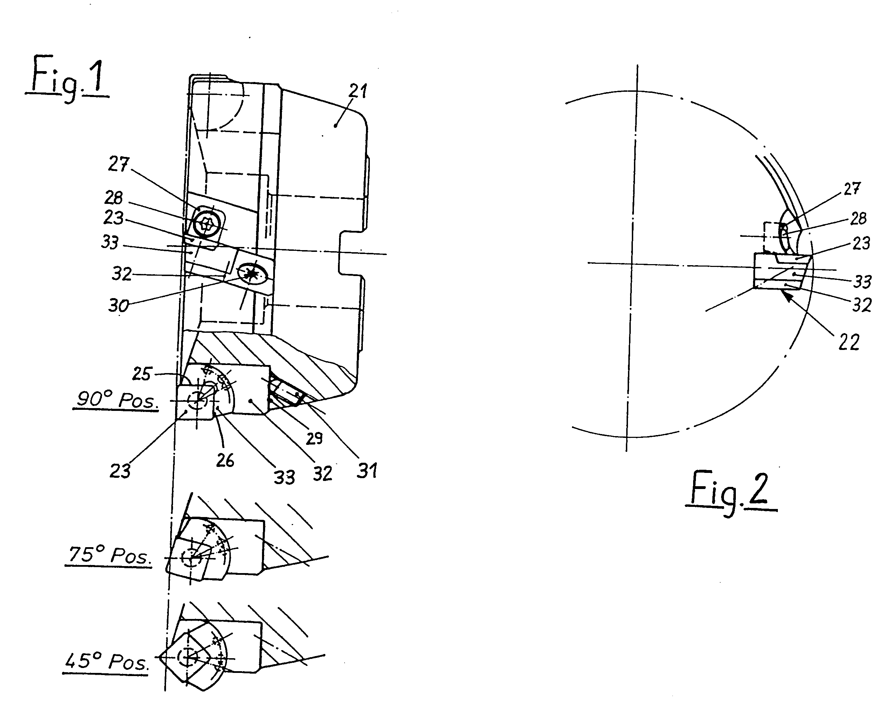

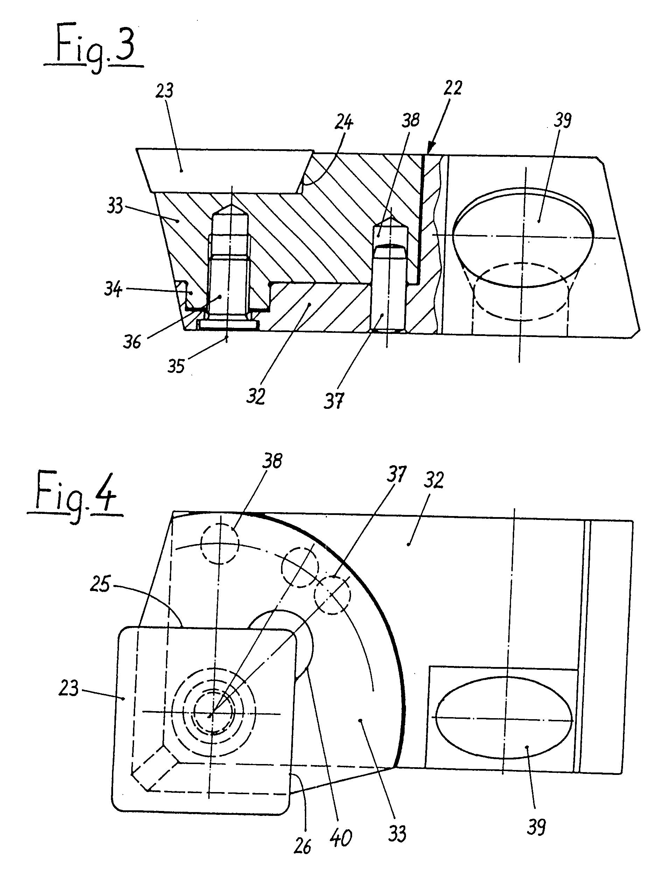

Bei dem in Fig. 1 und 2 gezeigten Ausführungsbeispiel eines Plan- und Eckfräsers ist der Grundkörper mit 21 bezeichnet, jede Kassette insgesamt mit 22 und die Wendeschneidplatte mit 23. Sie ist jeweils in einem Nest 24 mit seitlichen Begrenzungsflächen 25 und 26 aufgenommen, die einen rechten Winkel einschließen und Halteflächen bilden, welche die Lage der Wendeschneidplatte 22 bestimmen, wenn diese mittels eines Klemmkeils 27 und einer Klemmschraube 28 fixiert ist. Jede Kassette 22 sitzt genau passend in einer Einsenkung 29 im Grundkörper 21 und ist darin mittels einer Befestigungsschraube 30 in einer bestimmten Lage festgelegt. In an sich bekannter Weise kann dabei mittels einer in eine Gewindebohrung im Grundkörper 1 einschraubbare Stellschraube 31 eine axiale Feineinstellung der Kassette 22 vorgenommen werden. Jede Kassette 22 ist zweiteilig ausgebildet. Sie besteht aus einem Unterteil 32 und einem Oberteil 33. Das Nest 24 für die Wendeschneidplatte 23 ist in das Oberteil 33 eingearbeitet. Dieses hat außerdem in einstückiger Ausbildung auf der Unterseite einen Zapfen oder zapfenförmigen Vorsprung 34, der in einer genau passenden Bohrung im Unterteil 32 sitzt, deren Mittellängsachse 35 eine Schwenkachse bildet. Sie fällt zusammen mit der Mittellängsachse einer Gewindebohrung im Kassettenoberteil 33, in welche eine Verbindungsschraube 36 durch ein Durchgangsloch im Kassettenunterteil 32 einschraubbar ist. Wie aus Fig. 3 ersichtlich, ist die Höhe des Kopfs der Verbindungsschraube 36 so klein gewählt, daß er im montierten Zustand vollständig eingesenkt im Unterteil 32 sitzt. Weiterhin sitzt fest eingepreßt in diesem mit Abstand zur Schwenkachse 35 ein Positionierstift 37, der wahlweise mit einem von drei auf demselben Radius mit Bezug auf die Schwenkachse 35 angeordneten Stiftlöchern 38 in Eingriff gebracht werden kann. Je nach dem, in welchem der Stiftlöcher 38 der Positionierstift 37 sitzt, nimmt die Wendeschneidplatte 22 gemäß Fig. 1 die am Grundkörper 21 gezeigte 90°-Fräswinkel-Position, oder die neben dem Grundkörper 21 gezeigte 75°-Position bzw. 45°-Position ein. In jeder dieser drei Positionen ist die Stellung des Nests 24 und der Wendeschneidplatte 23 eindeutig bestimmt durch die Anlageflächen des Kassettenoberteils, nämlich die Umfangsfläche des Zapfens 34 und die zylindrische Fläche eines der Stiftlöcher 38 sowie die daran anliegenden Gegenflächen des Kassettenunterteils 32 mit dem Positionierstift 37.

Das hintere Ende des Kassettenoberteils 33, in welchem sich die Stiftlöcher 38 befinden, ist wiederum kreisbogenförmig mit der Schwenkachse 35 im Mittelpunkt ausgebildet. Dasselbe gilt für die benachbarte Stufenfläche des Kassettenunterteils 32.

Zum besseren Verständnis der Zeichnungsfiguren 3 und 4 ist dort das Schraubenloch für die Befestigungsschraube 30 mit 39 bezeichnet. Bei 40 ist eine Aussparung der Ecke zwischen den Halteflächen 25 und 26 bezeichnet.

Abweichend von dem dargestellten Ausführungsbeispiel, könnte auch der Positionierstift 37 im Kassettenoberteil 33 sitzen, während sich die Stiftlöcher 38 im Kassettenunterteil 32 befinden. Eine weitere Abwandlungsmöglichkeit sieht vor, daß die Wendeschneidplatte 23 nicht durch einen Klemmkeil fixiert, sondern durch eine von oben eingesetzte Schraube am Kassettenoberteil festgeschraubt wird.

## Patentansprüche

1. Kassette, bestehend aus einem Unterteil (32), welches in eine passende Einsenkung (29) des Grundkörpers (21) eines Plan- und Eckfräsers einsetzbar und darin durch äußere Positionierflächen und mit diesen zusammenwirkende Gegenflächen der Einsenkung (29) in einer definierten Lage, gegebenenfalls mit Feineinstellung, befestigbar ist, und einem Oberteil (33), welches in mehreren unterschiedlichen Drehwinkelstellungen am Unterteil (32) festlegbar ist und ein Nest (24) zur Aufnahme einer Wendeschneidplatte (23) in einer bestimmten Lage aufweist, **dadurch gekennzeichnet,** daß das Oberteil (33) mittels einer daran ausgebildeten Zentrierfläche (34) und mehrerer exzentrisch zu einer dadurch bestimmten Schwenkachse (35) angeordneter Fixierflächen (38) in solchen Drehwinkelstellungen am Unterteil (32) festlegbar ist, daß der Fräswinkel der Hauptschneide wahlweise 45° oder 90° beträgt, wobei sich die Schwenkachse (35) im mittleren Bereich der Wendeschneidplatte (23) befindet.

2. Kassette nach Anspruch 1, **dadurch** **gekennzeichnet,** daß die Schwenkachse (35) die Mittellängsachse einer Gewindebohrung für eine Befestigungsschraube (36) ist.

3. Kassette nach Anspruch 1 oder 2, **dadurch** **gekennzeichnet**, daß die Fixierflächen Stiftlöcher (38) sind, deren Mittellängsachsen auf gleichem Radius mit Bezug auf die Schwenkachse (35) liegen und sich parallel zu dieser erstrecken.

4. Kassette nach Anspruch 3, **dadurch** **gekennzeichnet**, daß die Stiftlöcher (38) mit einem in das Unterteil (32) eingepreßten passenden Stift (37) zusammenwirken.

5. Kassette nach einem der Ansprüche 1 - 4, **dadurch ge****kennzeichnet**, daß das Oberteil (33) und das Unterteil (32) in einer Drehwinkelstellung festlegbar sind, in welcher der Fräswinkel der Hauptschneide 75° beträgt.

6. Plan- und Eckfräser mit daran befestigter Kassette (22) nach einem der Ansprüche 1 bis 5.

7. Plan- und Eckfräser nach Anspruch 7, **dadurch** **gekennzeichnet,** daß die Wendeschneidplatten (23) jeweils durch einen gegen den Grundkörper (21) anzuziehenden Klemmkeil (27) in Anlage an bestimmten Flächen (25, 26) des Nests (24) gehalten sind.
